# EUROPÄISCHE PATENTSCHRIFT

(11) **EP 2 223 414 B1**
(45) Veröffentlichungstag und Bekanntmachung des Hinweises auf die Patenterteilung: **12.08.2015**
(21) Anmeldenummer: 08864223.6
(22) Anmeldetag: 06.11.2008
(51) Int. Cl.: H02K 1/20, H02K 1/32, H02K 9/06

(54) **ELEKTRISCHE MASCHINE MIT DOPPELAXIALLÜFTER**
ELECTRIC MACHINE HAVING A TWIN AXIAL FAN
MACHINE ÉLECTRIQUE À DOUBLE VENTILATEUR AXIAL

(30) Priorität: 20.12.2007 DE 102007061597
(43) Veröffentlichungstag der Anmeldung: 01.09.2010
(73) Patentinhaber: Siemens Aktiengesellschaft, 80333 München (DE)
(72) Erfinder: WEISS, Sebastian, 90522 Oberasbach (DE); DEEG, Christian, 90518 Altdorf (DE); RESSEL, Ekkehard, 91560 Heilsbronn (DE)
(86) Internationale Anmeldenummer: PCT/EP2008/065068
(87) Internationale Veröffentlichungsnummer: WO 2009/080400

(56) Entgegenhaltungen:
- CH-A- 260 180
- DE-A1- 10 323 010
- DE-C- 724 449
- JP-A- 2001 298 906
- JP-A- 2003 219 605
- SU-A1- 1 473 018

## Beschreibung

Die vorliegende Erfindung betrifft eine elektrische Maschine mit einem Stator, einem Rotor, der eine Welle besitzt, der radiale sowie axiale Kühlkanäle aufweist und der als Rotorlüfter wirkt, und einem Axiallüfter, der koaxial mit der Welle angeordnet ist und Kühlmittel in die axialen Kühlkanäle fördert. Der Axiallüfter seinerseits weist einen ersten Schaufelkranz auf, der von einem trichterförmigen Rohr umschlossen und mit diesem drehfest verbunden ist. Die kleinere Öffnung des trichterförmigen Rohrs steht direkt mit den axialen Kühlkanälen des Rotors in Verbindung.

Elektrische Maschinen höherer Leistung sind mit effektiven Kühlsystemen auszustatten. Erst mit einer leistungsfähigen Kühlung, ggf. eine zweiseitige Belüftung, lässt sich eine hohe Ausnutzung der elektrischen Maschine erreichen. Vielfach entfaltet der Rotor einer elektrischen Maschine selbst eine gewisse Lüfterwirkung, wenn er mit radial verlaufenden Kanälen versehen ist. Axialkanäle, die mit diesen radialen Kanälen in Verbindung stehen, ermöglichen einen Luftstrom von den Stirnseiten des Rotors hin zu den jeweiligen radialen Kanälen. Der Rotor arbeitet dann nach dem Prinzip eines Radiallüfters. Der so erzeugte Luftstrom kühlt nicht nur den Rotor selbst, sondern unter Umständen auch das Blechpaket des Stators.

Die Kühlwirkung des Rotorlüfters wird bestimmt durch den Lufteintritts- und Austrittsdurchmesser, die Fluidreibung und dynamische Druckverluste an Störstellen im Rotor. Eine dieser Störstellen ist der Lufteintritt der typischerweise stehenden Luft in die rotierenden Axialkanäle.

Um die Lüfterwirkung des Rotors zu optimieren, wird bisher lediglich darauf geachtet, die axiale Anströmfläche und die radiale Abströmfläche in einem sinnvollen Verhältnis zueinander zu halten, und ansonsten keine unnötigen Engstellen für die Luft bzw. das Kühlmittel zu schaffen. Der Lufteintrittswiderstand wird meist nicht optimiert.

Um auch die Wickelköpfe der elektrischen Maschine zu kühlen, wird oft ein Axiallüfter in einem gewissen Abstand zur Rotorstirnseite auf der Maschinenwelle montiert. Zur Vermeidung von Problemen durch gegenseitige Beeinflussung von Axiallüfter und Rotorlüfter gibt es Ausführungen, bei denen die Saugseite des Rotorlüfters von der Druckseite des Axiallüfters durch ein Rohr, auf der die Nabe des Axiallüfters aufgesetzt ist, getrennt wird.

Eine gattungsgemäße elektrische Maschine ist aus der Druckschrift SU 147 30 18 A1 bekannt. Sie besitzt ein Statorblechpaket und ein Rotorblechpaket jeweils mit radialen Kühlkanälen. Der Rotor weist zusätzlich axiale Kühlkanäle auf, um Kühlmittel von der Stirnseite des Rotors zu den radialen Kühlkanälen zu leiten. An der Stirnseite des Rotors ist ein Ventilator mit trichterförmiger Ummantelung angeordnet, der das Kühlmittel in die Axialkanäle des Rotors fördert. Das Kühlmittel strömt aus dem Wickelkopfraum in den Ventilator. Durch das Vorbeiströmen an dem Wickelkopf ist das Kühlmittel bereits erwärmt, bevor es in den Ventilator bzw. Rotor strömt. Eine ausreichende Kühlung des Rotors kann somit nicht in allen Fällen gewährleistet werden.

Weiterhin zeigt die Druckschrift DE 196 53 839 A1 einen Rotor eines Turbogenerators mit direkter Gaskühlung. Zwischen einer Rotorkappenplatte und einer Rotorwelle ist ein zweistufiges Schaufelgitter zur Anströmung des Rotors und der Rotorwicklung mit Kühlluft vorgesehen. Die in Strömungsrichtung erste Schaufelgitterstufe ist ein Verzögerungsgitter mit druckerzeugenden Eigenschaften, die in Strömungsrichtung folgende Schaufelgitterstufe ist ein Verzögerungsgitter mit umlenkenden Eigenschaften.

Des Weiteren offenbart die Druckschrift DE 79 00 792 U1 eine eigenbelüftete elektrische Maschine. Zur Förderung eines Kühlluftstroms dient ein Axiallüfter, der auf einer hohlen Nabe angeordnet ist, deren Innendurchmesser größer als der Durchmesser ist, auf dem die axialen Kühlkanäle des Läufers liegen. Zur mechanischen Versteifung sind zwischen der Nabe und der Läuferwelle einige Rippen vorgesehen.

Ferner beschreibt die Patentschrift DE 195 48 321 C1 eine Kühleinrichtung insbesondere für Turbogeneratoren. Ein Kühler ist über Zufuhrkanäle mit dem Läufer verbunden, in dem Kühlkanäle zur Kühlung der Leiter des Läufers ausgebildet sind. Wenigstens in einem Zufuhrkanal ist mindestens ein Schaufelkranz vorgesehen, der dem Kühlfluid eine tangentiale Geschwindigkeitskomponente in Drehrichtung des Läufers verleiht und so die Anströmung des Läufers durch das Kühlfluid begünstigt.

**Ferner beschreibt die Patentschrift** DE 103 23 010 A1 **eine elektrische Maschine mit einem Ständer, einem in dem Ständer koaxial angeordneten Läufer, einer Welle, auf die der Läufer drehfest montiert ist, und einem Axialwellenlüfter, der mittels einer Nabe auf der Welle drehfest angeordnet ist.**

Die Aufgabe der vorliegenden Erfindung besteht darin, die Kühlung einer elektrischen Maschine mit radial verlaufenden Kühlkanälen zu verbessern.

Erfindungsgemäß wird diese Aufgabe gelöst durch eine elektrische Maschine mit einem Stator, einem Rotor, der eine Welle besitzt, der radiale sowie axiale Kühlkanäle aufweist und der als Rotorlüfter wirkt, und einem Axiallüfter, der koaxial mit der Welle angeordnet ist und Kühlmittel in die axialen Kühlkanäle fördert, wobei der Axiallüfter einen ersten Schaufelkranz aufweist, der von einem trichterförmigen Rohr umschlossen und mit diesem drehfest verbunden ist, wobei die kleinere Öffnung des trichterförmigen Rohrs direkt mit den axialen Kühlkanälen des Rotors in Verbindung steht, und wobei der Axiallüfter **als Doppelaxialläufer ausgebildet ist und** einen zweiten Schaufelkranz aufweist, der am Außenumfang des Rohrs fest angebracht ist, um Kühlmittel zu dem Stator zu fördern.

In vorteilhafter Weise ist damit ein Doppelaxiallüfter mit getrennten Abgängen für Rotor und Stator bereitgestellt. Dadurch lässt sich in beiden Aktivteilen eine sehr leistungsfähige Kühlung erzielen.

Vorzugsweise verlaufen Schaufeln des ersten Schaufelkranzes des Axiallüfters an der dem Rotor zugewandten Seite in axialer Richtung. Dies bedeutet, dass sie in einer Ebene angeordnet sind, die durch eine radiale Richtung und die axiale Richtung definiert ist. Vorteilhaft bei dieser Ausrichtung ist, dass das Kühlmittel durch die Schaufeln dann die Umlaufgeschwindigkeit der axialen Kühlkanäle annimmt.

Der erste Schaufelkranz kann drehfest mit der Welle verbunden sein. Dadurch bedarf es keines Fremdantriebs für den Axiallüfter.

Darüber hinaus kann die große Öffnung des Rohrs, das den ersten Schaufelkranz umschließt, als Kühlmitteleintritt dienen und direkt mit einer Einströmdüse in Verbindung stehen, durch die das Kühlmittel dem ersten und dem zweiten Schaufelkranz zuführbar ist. Mit dieser Einströmdüse wird das Kühlmittel gezielt in den Bereich des Axiallüfters geleitet.

Des Weiteren kann der Stator ein Statorblechpaket mit radialen Kühlkanälen besitzen, die mit den radialen Kühlkanälen des Rotors korrespondieren. Damit wird die von dem Axiallüfter und dem Rotorlüfter erzeugte Kühlmittelströmung auch für den Stator genutzt.

Entsprechend einer weiteren Ausführungsform kann der Stator einen Wickelkopf besitzen, an dem der zweite Schaufelkranz direkt Kühlmittel hinfördert. Damit kann der häufig sehr heiß werdende Wickelkopf effizient gekühlt werden.

Die elektrische Maschine kann außerdem ein Gehäuse aufweisen, in dem die Einströmdüse ein von außen zugeführtes Kühlmittel ausschließlich zu dem Axiallüfter hinlenkt. Damit kann vermieden werden, dass das Kühlmittel sich im Wickelkopfraum erwärmt, bevor es dem Rotor zugeführt wird.

Gemäß einer weiteren Ausführungsform der elektrischen Maschine kann an beiden Seiten des Rotors jeweils ein oben genannter Axiallüfter angeordnet sein. Damit ist das leistungsfähige, erfindungsgemäße Kühlkonzept auch für zweiseitig belüftete Elektromaschinen einsetzbar.

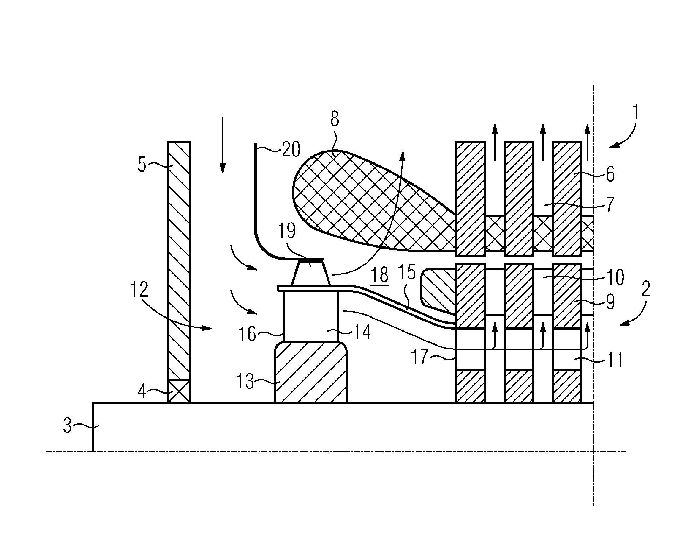

Die vorliegende Erfindung wird nun anhand der beigefügten Zeichnung näher erläutert, die einen Teillängsschnitt einer elektrischen Maschine mit dem erfindungsgemäßen Kühlprinzip darstellt.

Das nachfolgend näher geschilderte Ausführungsbeispiel stellt eine bevorzugte Ausführungsform der vorliegenden Erfindung dar.

Der in der FIG dargestellte Teil einer elektrischen Maschine setzt sich im Wesentlichen aus einem Stator 1 und einem Rotor 2 einschließlich einer Welle 3 zusammen. Die Welle ist mit Hilfe eines Lagers 4 an einem Lagerschild 5 gelagert.

Der Stator 1 besteht aus mehreren Statorteilblechpaketen 6, zwischen denen radiale Statorkühlkanäle 7 ausgebildet sind. An der Stirnseite des Stators 1 befindet sich ein Wickelkopf 8.

Der Rotor 2 ist ähnlich aus mehreren Rotorteilblechpaketen 9 hergestellt, zwischen denen radiale Rotorkühlkanäle 10 ausgebildet sind. Die einzelnen Rotorteilblechpakete 9 sind in axialer Richtung durchbrochen, so dass sich axiale Kühlkanäle 11 ergeben, die mit den radialen Rotorkühlkanälen in Verbindung stehen.

An der Stirnseite des Rotors 2 ist ein Axiallüfter 12 auf der Welle 3 drehfest montiert. Die Verbindung zu der Welle 3 erfolgt durch eine Nabe 13, die auf die Welle 3 gepresst ist. Am Außenumfang der Nabe 13 befindet sich ein erster Schaufelkranz 14 mit am Umfang gleichmäßig verteilten Lüfterflügeln. Die Lüfterflügel besitzen einen Austrittswinkel von 90°, d.h. der dem Rotor 2 zugewandte Teil des Lüfterflügel liegt in einer Ebene, die durch eine radial verlaufende und eine axial verlaufende Gerade aufgespannt ist. Somit trifft ein Kühlmittelstrom nach Passieren des Lüfterflügels senkrecht auf die Stirnfläche des Rotors.

Der innere bzw. erste Schaufelkranz 14 ist von einem konusförmigen bzw. trichterförmigen Rohr 15 umschlossen. Dieses Rohr 15 ist ebenfalls Teil des Axiallüfters 12 und dreht sich mit diesem sowie mit dem Rotor 2 mit. Ferner besitzt das trichterförmige Rohr 15 eine große Eintrittsöffnung 16 und am gegenüberliegenden Ende eine kleinere Austrittsöffnung 17. Der Innenradius der Austrittsöffnung 17 ist mindestens so groß wie die äußerste radiale Stelle der axialen Kühlkanäle 11. Außerdem schließen die axialen Kühlkanäle 11 in axialer Richtung unmittelbar an die Austrittsöffnung 17 an. Damit ist gewährleistet, dass das durch das trichterförmige Rohr 15 geförderte Kühlmittel ausschließlich in die axialen Kühlkanäle eingedrückt wird, aber nicht in den Wickelkopfraum 18.

Am Außenmantel des Rohrs 15, radial über dem ersten Schaufelkranz 14 befindet sich ein äußerer bzw. zweiter Schaufelkranz 19. Er setzt sich aus äußeren Lüfterflügeln zusammen, die auf dem Rohr 15 drehfest, in Umfangsrichtung gleich verteilt montiert sind. Sie dienen dazu, das Kühlmittel außerhalb des Rohrs 15 in Richtung auf den Wickelkopf 8 zu fördern. Damit das Kühlmittel, ohne von den Wickelköpfen vorgewärmt zu werden, direkt auf den Eintritt des Axiallüfters zugeführt wird, ist eine Einströmdüse 20 zwischen dem Lagerschild 5 und dem Wickelkopf 8 vorgesehen. Die Einströmdüse 20 bildet einen ringförmigen Kanal um die Welle 3, in dem der Axiallüfter 12 angeordnet ist.

In der elektrischen Maschine ergibt sich somit ein Kühlmittelstrom beginnend von außen bzw. von einem Kühler zwischen dem Lagerschild 5 und der Einströmdüse 20 hindurch auf den Doppelaxiallüfter 12 zu. Dort wird ein Teil des Kühlmittelstroms gefördert durch den inneren, ersten Schaufelkranz 14 zu den Axialkanälen 11 geleitet, und dringt dann durch die radialen Rotorkühlkanäle 10 sowie die damit fluchtenden radialen Statorkühlkanäle 7 radial nach außen. Ein anderer Teil des Kühlmittelstroms wird von dem äußeren, zweiten Schaufelkranz 19 des Doppelaxiallüfters 12 außerhalb des Rohrs 15 in den Wickelkopfraum 18 bzw. zu dem Wickelkopf 8 geführt. Damit dringt "unverbrauchtes" Kühlmittel gleichermaßen zum Wickelkopf 8 und zum Rotor 2.

Nachfolgend wird das Funktionsprinzip des erfindungsgemäßen Doppelaxiallüfters mit getrennten Abgängen für Rotor und Wickelkopf näher erläutert. Um den Kühlmittel- bzw. Lufteintrittswiderstand des Rotorlüfters zu minimieren, wird eine Drallströmung des Kühlmittels erzeugt und so zum Rotor geführt. Dies wird durch den dem Rotorlüfter vorgeschalteten Axiallüfter 12, dessen Schaufeln einen Austrittswinkel von möglichst 90° aufweisen, erreicht. Einen weiteren kühlungsfördernden Effekt bewirkt die Verengung durch das Rohr nach dem Axiallüfter 12. Beim Durchströmen der Verengung wird die Axialkomponente der Strömung erhöht, wodurch der Gesamtströmungsvektor mehr axial ausgerichtet wird, da die Tangential- und Radialkomponenten nicht vergrößert werden. Somit kann auch bei Austrittswinkeln unter 90° eine drallbehaftete Zuströmung zu dem Rotorlüfter gewährleistet werden. Der Eintrittswinkel, d.h. der Anströmwinkel des Kühlmittels bezogen auf die Lüfterschaufeln, wird der Drehzahl und dem zu erwartenden Volumenstrom angepasst.

Der Axiallüfter 12 ist hier, wie erwähnt, als Doppelaxiallüfter ausgebildet. Aufgrund des Rohrs 15 zwischen seinen beiden Schaufelkränzen erzeugt er zwei unabhängige Kühlmittelströme für den Rotor und den Stator bzw. die Wickelköpfe. Das Rohr 15 besitzt neben der Funktion der Trennung der beiden Kühlmittelströme zusätzlich die bereits erwähnte Funktion der Druckerhöhung des Kühlmittels, da das Rohr konisch bzw. trichterförmig ausgebildet ist. Der zweite, äußere Axiallüfter des Doppelaxiallüfters dient dazu, wie ebenfalls bereits angedeutet, die Wickelköpfe der Elektromaschine ausreichend mit Kühlmittel zu versorgen. Der Doppelaxiallüfter hat somit neben der Erzeugung zweier unabhängiger Kühlmittelströme zusätzlich die dritte Funktionalität der Druckerhöhung. Der erfindungsgemäße Aufbau der elektrischen Maschine besitzt somit den Vorteil einer besser kontrollierbaren Aufteilung der Kühlmittelströme durch den Blechpaketbereich und die Wickelköpfe. Darüber hinaus wird eine optimale Anströmung des Rotorlüfters durch einen reduzierten Kühlmitteleintrittswiderstand erzielt, wodurch sich die Wirksamkeit des Rotorlüfters verbessert. Ferner sorgt der vorgeschaltete Axiallüfter für einen zusätzlichen Druckaufbau am Rotorlüfter. Letztendlich ist aufgrund der verbesserten Kühlung eine Leistungssteigerung der Elektromaschine möglich.

Die elektrische Maschine kann beispielsweise als Elektromotor, aber auch als Generator realisiert sein. Darüber hinaus kann das Kühlprinzip auch für elektrische Maschinen verwendet werden, die anders als in dem oben erwähnten Beispiel aufgebaut sind. So können die Wickelköpfe auch am Rotor angeordnet sein, so dass beispielsweise der durch den äußeren Schaufelkranz 19 erzeugte Kühlmittelstrom bzw. Kühlluftstrom auf die Wickelköpfe des Rotors und zusätzlich auf die Stirnseite des Stators gelenkt wird. Selbstverständlich sind auch beliebige andere Bauformen der elektrischen Maschine denkbar. Insbesondere ist es auch günstig, die elektrischen Maschinen zweiseitig jeweils mit derartigen Doppelaxiallüftern zu belüften.

## Patentansprüche

1. Elektrische Maschine mit
- einem Stator (1),
- einem Rotor (2), der eine Welle (3) besitzt, der radiale sowie axiale Kühlkanäle (10,11) aufweist und der als Rotorlüfter wirkt, und
- einem Axiallüfter(12), der koaxial mit der Welle (3) angeordnet ist und Kühlmittel in die axialen Kühlkanäle (11) fördert, wobei
- der Axiallüfter (12) einen ersten Schaufelkranz (14) aufweist, der von einem trichterförmigen Rohr (15) umschlossen und mit diesem drehfest verbunden ist, und wobei
- die kleinere Öffnung (17) des trichterförmigen Rohrs (15) direkt mit den axialen Kühlkanälen (11) des Rotors (2) in Verbindung steht,
**dadurch gekennzeichnet, dass**
- der Axiallüfter (12) als Doppelaxiallüfter ausgebildet ist und einen zweiten Schaufelkranz (19) aufweist, der am Außenumfang des Rohrs (15) fest angebracht ist, um Kühlmittel zu dem Stator (1) zu fördern.

2. Elektrische Maschine nach Anspruch 1, wobei Schaufeln des ersten Schaufelkranzes (14) des Axiallüfters (12) an der dem Rotor (2) zugewandten Seite in axialer Richtung verlaufen.

3. Elektrische Maschine nach Anspruch 1 oder 2, wobei der erste Schaufelkranz (14) drehfest mit der Welle (3) verbunden ist.

4. Elektrische Maschine nach einem der vorhergehenden Ansprüche, wobei die große Öffnung (16) des Rohrs (15) als Kühlmitteleintritt dient und direkt mit einer Einströmdüse (20) in Verbindung steht, durch die das Kühlmittel dem ersten und dem zweiten Schaufelkranz (14,19) zuführbar ist.

5. Elektrische Maschine nach einem der vorhergehenden Ansprüche, wobei der Stator (1) ein Statorblechpaket mit radialen Kühlkanälen (7) besitzt, die mit den radialen Kühlkanälen (10) des Rotors (2) korrespondieren.

6. Elektrische Maschine nach einem der vorhergehenden Ansprüche, wobei der Stator (1) einen Wickelkopf (8) besitzt, an den der zweite Schaufelkranz (19) direkt Kühlmittel hinfördert.

7. Elektrische Maschine nach einem der vorhergehenden Ansprüche, die ein Gehäuse aufweist, in dem die Einströmdüse (20) ein von außen zugeführtes Kühlmittel ausschließlich zu dem Axiallüfter (12) hinlenkt.

8. Elektrische Maschine nach einem der vorhergehenden Ansprüche, wobei an beiden Stirnseiten des Rotors (2) jeweils ein genannter Axiallüfter (12) angeordnet ist.

## Claims

1. Electric machine having
- a stator (1),
- a rotor (2) comprising a shaft (3) and provided with radial and axial cooling channels (10, 11) and acting as a rotor fan, and
- having an axial fan (12) that is disposed coaxially with the shaft (3) and delivers coolant into the axial cooling channels (11),
- the axial fan (12) having a first blade ring (14), which is enclosed by a funnel-shaped tube (15) and is non-rotatably connected to the same, and
- the smaller opening (17) of the funnel-shaped tube (15) being directly connected to the axial cooling channels (11) of the rotor (2),
**characterized in that**
- the axial fan (12) has a second fan ring (19), which is firmly attached at the outer circumference of the tube (15) in order to deliver coolant to the stator (1).

2. Electric machine according to Claim 1, blades of the first blade ring (14) of the axial fan (12) extending in the axial direction on the side that faces towards the rotor (2).

3. Electric machine according to Claim 1 or 2, the first blade ring (14) being non-rotatably connected to the shaft (3).

4. Electric machine according to any one of the preceding claims, the large opening (16) of the tube (15) serving as a coolant intake and being directly connected to an inflow nozzle (20), through which the coolant can be delivered to the first and the second blade ring (14, 19)

5. Electric machine according to any one of the preceding claims, the stator (1) having a stator laminated core having radial cooling channels (7), which correspond with the radial cooling channels (10) of the rotor (2).

6. Electric machine according to any one of the preceding claims, the stator (1) having a winding overhang (8), to which coolant is delivered directly by the second blade ring (19).

7. Electric machine according to any one of the preceding claims, which has a housing, in which the inflow nozzle (20) directs an externally supplied coolant exclusively to the axial fan (12).

8. Electric machine according to any one of the preceding claims, a said axial fan (12) being disposed respectively on both end sides of the rotor (2).

## Revendications

1. Machine électrique comprenant
- un stator (1),
- un rotor (2), qui possède un arbre (3), lequel a des canaux (10, 11) de refroidissement radiaux, ainsi qu'axiaux, et qui sert de ventilateur de rotor et
- un ventilateur (12) axial, qui est monté coaxialement à l'arbre (3) et qui véhicule du fluide de refroidissement dans les canaux (11) de refroidissement axiaux, dans laquelle
- le ventilateur (12) axial a une première couronne (14) de pales, qui est entourée d'un tuyau (15) en forme d'entonnoir en en étant solidaire en rotation et dans laquelle
- l'ouverture (17) la plus petite du tuyau (15) en forme d'entonnoir communique directement avec les canaux (11) de refroidissement axiaux du rotor (2),
**caractérisée en ce que**
- le ventilateur (12) axial est constitué en double ventilateur axial et a une deuxième couronne (19) de pales, qui est mise de manière fixe sur le pourtour extérieur du tuyau (15) pour véhiculer du fluide de refroidissement au stator (1).

2. Machine électrique suivant la revendication 1, dans laquelle des pales de la première couronne (14) de pales du ventilateur (12) axial s'étendent dans la direction axiale du côté tourné vers le rotor (2).

3. Machine électrique suivant la revendication 1 ou 2, dans laquelle la première couronne (14) de pales est solidaire en rotation de l'arbre (3).

4. Machine électrique suivant l'une des revendications précédentes, dans laquelle la grande ouverture (16) du tuyau (15) sert d'entrée pour le fluide de refroidissement et communique directement avec une buse (20) d'entrée, par laquelle le fluide de refroidissement peut être envoyé à la première et à la première couronnes (14, 19) de pales.

5. Machine électrique suivant l'une des revendications précédentes, dans laquelle le stator (1) possède un paquet de tôles statoriques ayant des canaux (7) de refroidissement radiaux, qui correspondent aux canaux (10) de refroidissement radiaux du rotor (2).

6. Machine électrique suivant l'une des revendications précédentes, dans laquelle le stator (1) possède une tête (8) de bobine, à laquelle la deuxième couronne (19) de pales envoie directement du fluide de refroidissement.

7. Machine électrique suivant l'une des revendications précédentes, qui a une enveloppe, dans laquelle la buse (20) d'entrée dévie exclusivement vers le ventilateur (12) axial du fluide de refroidissement envoyé de l'extérieur.

8. Machine électrique suivant l'une des revendications précédentes, dans laquelle respectivement un dit ventilateur (12) axial est disposé des deux côtés frontaux du rotor (2).
